**Europäisches Patentamt**

**European Patent Office**

**Office européen des brevets**

(19)

(11) Veröffentlichungsnummer:, **0 113 811**
**A2**

(12) **EUROPÄISCHE PATENTANMELDUNG**

(21) Anmeldenummer: **83109526.0**

(22) Anmeldetag: **24.09.83**

(51) Int. Cl.³: **C 10 B 57/06**, C 10 B 53/00

(30) Priorität: **22.12.82 DE 3247388**

(43) Veröffentlichungstag der Anmeldung: **25.07.84**
**Patentblatt 84/30**

(84) Benannte Vertragsstaaten: **BE DE FR GB IT LU NL SE**

(71) Anmelder: **WSW Planungs-GMBH, Riphaushof,**
**D-4355 Waltrop (DE)**

(72) Erfinder: **Kraft, Richard, Dr., Im Frett 1, D-4370 Marl (DE)**
Erfinder: **Stog, Wilhelm, Dipl.-Ing., In der Baut 9,**
**D-4355 Waltrop (DE)**
Erfinder: **Stog, Jochen, Dorfmüllerstrasse 13,**
**D-4355 Waltrop (DE)**

(74) Vertreter: **Schulte, Jörg , Dipl.-Ing., Hauptstrasse 2,**
**D-4300 Essen-Kettwig (DE)**

(54) **Verfahren zur Gewinnung von Rohstoffen aus Kunststoffabfällen und Anlage zur Durchführung des Verfahrens.**

(57)  Kunststoffabfälle werden in ihre chemischen Bausteine zerlegt, indem sie zusammen mit der Kokskohle in herkömmlichen Koksöfen verkokt und die dabei freigesetzten Bestandteile mit den bei der Verkokung der Kohle frei werdenden Bestandteilen gemeinsam weiterverarbeitet und aufbereitet werden. Für die Pyrolyse von Kunststoffabfällen werden somit weder für den eigentlichen Pyrolyseprozeß noch für die Aufbereitung der gewonnenen chemischen Bausteine gesonderte Einrichtungen notwendig. Die Kunststoffabfälle werden nach dem Füllstoffgehalt sortiert und als Einzelkomponente oder im Gemisch der Kokskohle zugemischt oder in bestimmten Abschnitten in den Koksofen eingebracht. Die gezielte Zugabe des Kunststoffes führt sowohl zu einer Verbesserung des Kokses als auch des freigesetzten Gases.

# Dipl. Ing. Jörg Schulte
Patentanwalt
Zugelassener Vertreter beim Europäischen
Patentamt

Patentanwalt Dipl. Ing. Schulte
Hauptstr. 73 - 4300 Essen 18

Telefon (0 20 54) 89 66 + 89 67
Hauptstraße 73
4300 Essen-Kettwig
Konten: Stadtsparkasse Essen
7 020 571 (BLZ 360 501 05)
Postscheck: Essen 210 734-433
(BLZ 360 100 43)

Datum

Ref : E . 2085
in der Antwort bitte angeben.

WSW Planungs-GmbH
Riphaushof
4355 Waltrop

Verfahren zur Gewinnung von Rohstoffen aus
Kunststoffabfällen und Anlage zur Durchführung
des Verfahrens

Die Erfindung betrifft ein Verfahren zur Gewinnung von Rohstoffen aus Kunststoffabfällen durch Zersetzung unter hohen Temperaturen und Sauerstoffabschluß, Abscheidung der flüssigen Bestandteile, sowie anschließendem Waschen und Aufarbeiten der flüssigen und der gasförmigen Rohstoffe. Die Erfindung betrifft außerdem eine Anlage zur Durchführung des Verfahrens, d.h. zur thermischen Zersetzung von Abfällen von Kunststoffen, bestehend aus einer Sortier- und Zumischeinrichtung, einem Reaktor mit einem indirekt beheizbaren Reaktorraum und nachgeschalteten Kühlern und Destillationseinrichtungen.

- 2 -

Im Rahmen immer geringer werdender Energiereserven sind die Anstrengungen intensiviert worden, durch Recycling die Nutzbarkeit der Rohstoffquellen zu verlängern. Grund für diese Bestrebungen ist außerdem das gestiegene Umweltbewußtsein sowie die hohen Kosten für die Beseitigung der Abfälle insbesondere der verschiedenen Kunststoffabfällen. Die Wichtigkeit des Recyclings wird u.a. auch dadurch untermauert, daß die Förderkosten für das benötigte Rohöl jährlich steigen und auch die Versuche, aus Steinkohle Öl zu gewinnen, bisher nicht zu einer Entlastung des Öl- marktes geführt haben.

Bekannt sind verschiedene Verfahren zur Verwertung von Kunststoffabfällen über die Schmelze, wobei allerdings die Reinheit und eine große Menge gleichen Kunststoffabfalles Voraussetzung ist. Dabei behalten die Kunststoffe grundsätzlich ihre Struktur, während bei anderen Verfahren ein Abbau erfolgt. Bei den bekannten Verfahren wird in der Regel Energie zurückgewonnen, nur im geringeren Prozentsatz auch Rohstoffe.

Bekannt ist ein Verfahren (Sonderdruck TECHNIQUES for Pyrolysing Plastics Waste aus Japan Plastics (Oktober 1973))

- 3 -

mit dem Polystyrol-Einweg-Verpackungen pyrolysiert werden sollen. Bei Temperaturen um 5oo$^{\circ}$ C werden etwa 75 bis 8o % des eingesetzten Materials als Heizöl gewonnen. Die Pyrolyse Gase werden nach der Verbrennung einem Wäscher zugeführt,in dem das HCl absorbiert wird. Bekannt ist auch das sogenannte Hamburger Verfahren, bei dem Abfälle von verschiedenen Kunststoffen unter hohen Temperaturen und Sauerstoffabschluß in einem Reaktor mit Wirbelschicht pyrolysiert werden. In den Wirbelschichtreaktor mit entsprechender Ausmauerung werden die Kunststoffabfälle über eine gasdichte Schleuse eingegeben und der hohen Temperatur ausgesetzt. Die Wirbelschicht wird über gereinigtes Pyrolysegas fluidisiert und indirekt beheizt. Die freigesetzten Rohgase werden in einem Kühler und einer nachfolgenden Destillationseinrichtung in gasförmige und flüssige Produkte aufgeteilt. Eine Reinigung der Gase ist eingeschlossen. Nach entsprechenden Laborversuchen ist eine Technikumsanlage erprobt worden. Aufbauend auf den Ergebnissen dieser Anlagen muß das Verfahren nun noch im großtechnischem Maßstab erprobt werden (Institut für anorganische und angewandte Chemie der Universität Hamburg; Schlußbericht zum Teilprojekt 5, Hamburg, Januar 1981).

Nachteilig bei den bekannten Verfahren ist, daß jeweils neue Anlagen konzepiert und gebaut werden müssen, um den an den unterschiedlichsten Stellen anfallenden Kunststoffabfall nach den beschriebenen Verfahren zur Gewinnung von Rohstoffen einsetzen zu können. Abgesehen davon, daß die Weiterentwicklung des Verfahrens kosten- und zeitaufwendig ist, muß auch für die Weiterverarbeitung, Lagerung und den Abtransport der erarbeiteten Rohstoffe eine entsprechende Anlage vorhanden sein. Um derartige Anlagen wirtschaftlich betreiben zu können, müssen erhebliche Mengen an Kunststoffen unter günstigen Bedingungen zur Verfügung stehen, d.h. sie dürfen insbesondere nicht durch hohe Trans-

- 4 -

portkosten belastet sein.

Der Erfindung liegt die Aufgabe zugrunde, ein Verfahren zu schaffen, mit dem Kunststoffabfälle wirtschaftlich und umweltfreundlich wiederverwertet werden können. Außerdem soll eine dafür geeignete Anlage geschaffen werden.

Die Aufgabe wird erfindungsgemäß dadurch gelöst, daß die Abfälle von thermoplastischen Kunststoffen, vorzugsweise von Polypropolen, Polyäthylen und Polystyrol oder derartigen Abfallgemischen zusammen mit der Kokskohle in Koksöfen verkokt und daß die Rohstoffe aus der Kohle und den Kunststoffabfällen gemeinsam weiterverarbeitet werden.

Koksofenanlagen stehen nicht nur im Bereich des Ruhr- und Saargebietes, sondern darüberhinaus auch dort zur Verfügung, wo sie zur Erzeugung des Kokses für Hochöfen benötigt werden. Darüberhinaus sind in verschiedenen Städten Anlagen zur Erzeugung von Gas und Koks vorhanden, wobei jeder einzelne Koksofen als Reaktor anzusehen ist. Hier werden unter Sauerstoffabschluß für die Verkokung geeignete Steinkohlen verkokt, wobei die flüssigen und gasförmigen Produkte über Sammeleinrichtungen, Reinigungs- und Separiereinrichtungen weiterverarbeitet werden. Moderne derartige Anlagen können dem jeweiligen Bedarf an Koks angepaßt in bestimmten Grenzen betrieben werden. Ihre Kapazität ist somit ausreichend, um bei Bedarf mehr oder weniger Abfälle von Kunststoffen mit zu verkoken bzw. zu zersetzen. Zwar ist bereits versucht worden, Altreifen in derartigen Koksöfen zu vernichten (G.Karwat, Bericht zum Forschungsvorhaben "Abfallbeseitigung", Bergbauforschung GmbH, Essen, 1976), doch sind diese Versuche kurzfristig wieder abgebrochen worden, weil das eingesetzte Reifenmaterial den Garungsprozeß, insbesondere aber den Abtransport und die Aufbereitung der flüssigen und gasförmigen Produkte so

- 5 -

erheblich beeinflußt, daß der Weiterbetrieb der Anlage gefährdet war. Im Gegensatz hierzu werden nach dem erfindungsgemäßen Verfahren Kunststoffe und zwar bestimmte Arten von Kunststoffen eingesetzt, die überraschend nicht zu einer Beeinträchtigung, sondern vielmehr zu einer positiven Beeinflussung des Kokses und darüberhinaus auch der gasförmigen und flüssigen Produkte führte. Somit bringt das erfindungsgemäße Verfahren nicht nur den Vorteil der Gewinnung von Rohstoffen aus Kunststoffabfällen, sondern gleichzeitig auch die positive Beeinflussung des Kokses und die Erhöhung des Wertes des erzeugten Gases und der sonstigen Wertstaffel.

Neben den Verfahren zur Verkokung von Steinkohle sind auch Verfahren zur Verkokung bzw. Verschwelung von Braunkohlen bekannt. Bei einer derartigen trockenen Destillation werden die Ausgangsprodukte bei 5oo bis 6oo$^{o}$ C in Koks und Wertstoffe verarbeitet. Auch bei einem derartigen Verfahren können nach dem erfindungsgemäßen Verfahren ebenfalls aus Kunststoffabfällen hochwertige Rohstoffe gewonnen werden. Hierzu ist vorgesehen, daß die Abfälle zusammen mit der Kokskohle einer trockenen Destillation unterzogen werden.

Kunststoffe werden aus Gründen der Rohstoffverbilligung aber auch aus anderen Gründen z.B. Einfärbung mit Füllstoffen versehen werden. Diese Füllstoffe würden den Garungsprozeß und die Weiterverarbeitung nach dem erfindungsgemäßen Verfahren erschweren. Von daher ist es zweckmäßig, die Abfälle nach Füllstoffgehalt sortiert und nur die Abfälle mit geringem Füllstoffgehalt, vorzugsweise von 1 bis 2 % im Koksofen unter hohen Temperaturen zu zersetzen. Bei einem derartigen Verfahren ist sichergestellt, daß weder das eine noch das andere Verfahren, d.h. das Verkokungsverfahren noch das Verfahren zur Aufarbeitung von Kunststoffen negativ beeinflußt werden. Insbesondere wird es nicht zu Verstopfungen

- 6 -

in den Abführungsleitungen für die flüssigen und gasförmigen Produkte kommen.

Nach einer Ausbildungsform der Erfindung ist vorgesehen, daß die Abfälle von Kunststoffen zerkleinert, gebunkert und dann der Kokskohle kontinuierlich zugemischt werden. Hierbei ist sichergestellt, daß eine gleichmäßige Verteilung des Kunststoffmaterials innerhalb der Kokskohlenmischung gegeben ist, so daß ein gleichmäßiges Gemisch in den Koksofen eingefüllt wird. Insbesondere bei kleineren Prozentsätzen an Zumischung von Kunststoffabfällen ist sichergestellt, daß eine negative Beeinflussung des Verkokungsprozesses nicht eintritt. Dies gilt insbesondere dann, wenn die Abfälle von Kunststoffen der Kokskohle in einem Verhältnis von o,5 bis 2o Volumen-% zugemischt werden.

Weniger gut verkokbare Kokskohlen können ebenfalls gleichzeitig mit Kunststoffabfällen verarbeitet werden, wenn wie erfindungsgemäß vorgeschlagen, die Kokskohle vorerhitzt und mit Bindemittel versetzt mit den zerkleinerten, vorzugsweise aufgemahlenen Abfällen von Kunststoffen gemischt, verdichtet und dann gemeinsam verkokt wird. Derartige Verfahren können insbesondere in sogenannten Stampfkokereien verwirklicht werden, wobei nach einer weiteren Ausbildung in vorteilhafter Weise auf ein gesondertes Bindemittel verzichtet werden kann, wenn nämlich die Kokskohle mit 2 bis 1o Volumen-%, vorzugsweise 2 bis 4 Volumen-% Abfällen von Kunststoffen gemischt, auf 1oo bis 15o$^\circ$ C vorerhitzt, verdichtet und dann verkokt wird. Hier übernehmen die Abfälle von Kunststoffen die Aufgabe des Bindemittels, wobei bei entsprechender Feinvermahlung und intensiver Mischung mit der Kokskohle ein gleichmäßiger und ausreichend standfester Stampfkuchen zu erzeugen ist. Bei Anwendung dieser Verfahrensvariante wird das Verkokungsverfahren sogar erheblich verbilligt, da für die Bindemittel

- 7 -

teilweise erhebliche Preise gezahlt werden müssen und außerdem eine gesonderte Vorbehandlung der Kokskohle notwendig ist.

Nach einer weiteren Ausbildung der Erfindung werden die Abfälle von Kunststoffen und die Kokskohle lagenweise in den Koksofen eingefüllt. Durch das lagenweise Einfüllen, wobei die Lagen an Kunststoffen naturgemäß wesentlich weniger mächtig als die der Kokskohle sind, kann bei gezieltem Einbringen sichergestellt werden, daß die freigesetzten Gase aus den Kunststoffabfällen beim Durchdringen des Kokskuchens nicht unnötig einer Crackung unterzogen werden. Auf ähnliche Art und Weise wird ein Cracken der aus den Kunststoffen freigesetzten Gase bzw. der mitgeführten flüssigen Bestandteile verhindert, wenn die Abfälle, wie erfindungsgemäß vorgesehen, beim Einfüllen der Kokskohle dieser nur im Bereich der Koksofentüren zugemischt werden. Hier stehen nämlich zwischenzeitlich Koksofentüren zur Verfügung, bei denen die im Bereich der Koksofentüren freiwerdenden Gase durch einen vertikalen Gassammelkanal abgezogen werden können. Eine weitere Beeinflussung der freigesetzten Gase und flüssigen Bestandteile ist somit sicher unterbunden.

Überraschend können auch Kunststoffe mit höherem Füllstoffgehalt bzw. Füllstoffanteil verarbeitet und zur Erzeugung von Rohstoffen herangezogen werden, indem die Abfälle von Kunststoffen vorzugsweise die mit mittlerem und hohem Füllstoffanteil kurz vor oder nach Abschluß der Garung in den Koksofen eingefüllt und thermisch zersetzt werden. Vorteilhaft ist dabei, daß die Kunststoffabfälle gleich einer sehr hohen Temperatur ausgesetzt und somit in verhältnismäßig kurzer Zeit zu zersetzen sind. Da die Füllstoffe zusammen mit den Gasen freigesetzt werden, andere Gase insbesondere die mit hohem Teeranteil aber zu diesem

- 8 -

Garungsabschnitt nicht mehr abgeführt werden müssen, können die Kunststoffabfallgase beispielsweise in parallelgeschalteten Zyklonen von den Feststoffpartikeln und dem Ruß befreit werden.

Insbesondere bei Kunststoffen mit verhältnismäßig grobkörnigem Füllstoff ist es möglich, den Füllstoff im Kokskuchen zu fixieren, so daß eine Verunreinigung der abgeführten Gase nicht eintritt. Hierzu werden die Abfälle von Kunststoffen mit mittlerem und hohem Füllstoffanteil als dünne Schicht eingefüllt und dann von Kokskohle abgedeckt mit dieser zusammen thermisch zersetzt.

Zur Durchführung des Verfahrens dient eine Anlage, die aus einer Sortier- und Zumischeinrichtung, einem Reaktor mit einem indirekt beheizbaren Reaktorraum und nachgeschalteten Kühlern und Destillationseinrichtungen besteht. Hierbei dient als indirekt beheizbarer Reaktorraum der Koksofen, während als nachgeschaltete Kühler-und Destillationseinrichtungen die von vorhandenen Kokereien dienen. Zur Lösung der Aufgabenstellung ist vorgesehen, daß die Sortier- und Zumischeinrichtungen dem Kokskohlenturm einer Kokerei oder einem Füllwagen zugeordnet sind und daß die Koksöfen gleichzeitig zur Verkokung von Kohle, vorzugsweise Steinkohle und zur thermischen Zersetzung der Abfälle von Kunststoffen sowie die Teer- und Gasaufbereitung gleichzeitig auch zur Weiterverarbeitung der Rohrstoffe aus den Kunststoffabfällen dienen. Wie erläutert, sind moderne Koksöfen in gewissen Grenzen dem jeweiligen Koksbedarf angepaßt zu betreiben. Von daher ist in der Regel genügend Kapazität vorhanden, um auch die Kunststoffabfälle mit zu verarbeiten. Eine weitere Regelung ist dann gegeben, wenn jeweils einzelnen Koksöfen eine Sortier- und Zumischeinrichtung für Abfälle von Kunststoffen zugeordnet ist. Dabei kann in zweckmäßiger Weise die Aufarbeitung von Kunststoffabfällen einigen wenigen Koksöfen zugeordnet werden,so daß auch geringste Mengen

- 9 -

an Kunststoffen in einer derartigen Anlage verarbeitet werden können. Die Anzahl der Öfen kann variiert werden, wenn die Sortier- und Zumischeinrichtung transportabel, insbesondere dem Füllwagen zugeordnet ist.

Müssen aus irgendwelchen Gründen Kunststoffabfälle mit hohem Füllstoffanteil verarbeitet werden oder ist bei Verarbeitung von Abfallgemischen nicht durch andere geeignete Maßnahmen die Aussortierung derartiger Kunststoffabfälle zu erreichen, ist es zweckmäßig, dem Teerscheider einen Zyklon vor oder parallel zuzuschalten. Über den Zyklon können die möglichst bereits vom Teer befreiten Gase von eventuell mitgeführten Füllstoffpartikeln befreit werden.

Eine gezielte Zugabe von Kunststoffabfällen zum jeweiligen Ofenbesatz ist gemäß der Erfindung einfach zu gewährleisten, indem der Füllwagen einen zusätzlichen Fülltrichter aufweist, der mit dem Auslauf der anderen Fülltrichter über ein Rohr verbunden ist, dem jeweils miteinander korrespondierend schaltbare Ventile zugeordnet sind. Über eine derartige Einrichtung kann die Anlage den jeweiligen Bedingungen entsprechend betrieben werden, wobei Kunststoffe sowohl im Gemisch mit der Kokskohle als auch in Form von horizontalen oder vertikalen Lagen eingebracht werden können.

Die Erfindung zeichnet sich insbesondere dadurch aus, daß das Verfahren zur Pyrolyse von Kunststoffabfällen vereinfacht und wirtschaftlich durchführbar ist, weil auf vorhandene Anlagen zurückgegriffen werden kann. Dabei ist es bei zweckmäßiger Vorbehandlung der Kunststoffe und auch gegebenenfalls der Kokskohle möglich, unterschiedlich hohe Gehalte an Kunststoffabfällen mit zu zersetzen und dabei sowohl den Koks wie auch das Gas- und flüssige Produkt von Kokereien positiv zu beeinflussen . Die wertvollen Aromate aus den Kunststoffabfällen führen dazu, daß die gewonnenen Kohlenwert-

- 1o -

stoffe wesentlich wertvoller und für die verschiedensten Einsatzfälle geeignet sind. Der Koks kann sowohl dadurch beeinflußt werden, daß auch minderwertige Kohlen bei Zusatz von Kunststoffabfällen verkokt werden können, als auch daß die Qualität des erzeugten Kokses in Bezug auf die Stückigkeit  und die Festigkeit erhöht wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen auch zur weiteren Erläuterung des erfindungsgemäßen Verfahrens dargestellt ist. Es zeigen:

Fig. 1    eine schematisierte Darstellung einer Anlage zur Gewinnung von Rohstoffen aus Kunststoffabfällen,

Fig. 2    den Pyrolyseteil der Einrichtung im Schnitt,

Fig. 3    eine Zumischeinrichtung in Seitenansicht,

Fig. 4    eine schematisierte Darstellung einer Sortier- und Zumischeinrichtung,

Fig. 5    einen Koksofen im Schnitt mit Zusatzeinrichtungen und

Fig. 6    einen Teilbereich gemäß Fig. 5 in vergrößerter Darstellung.

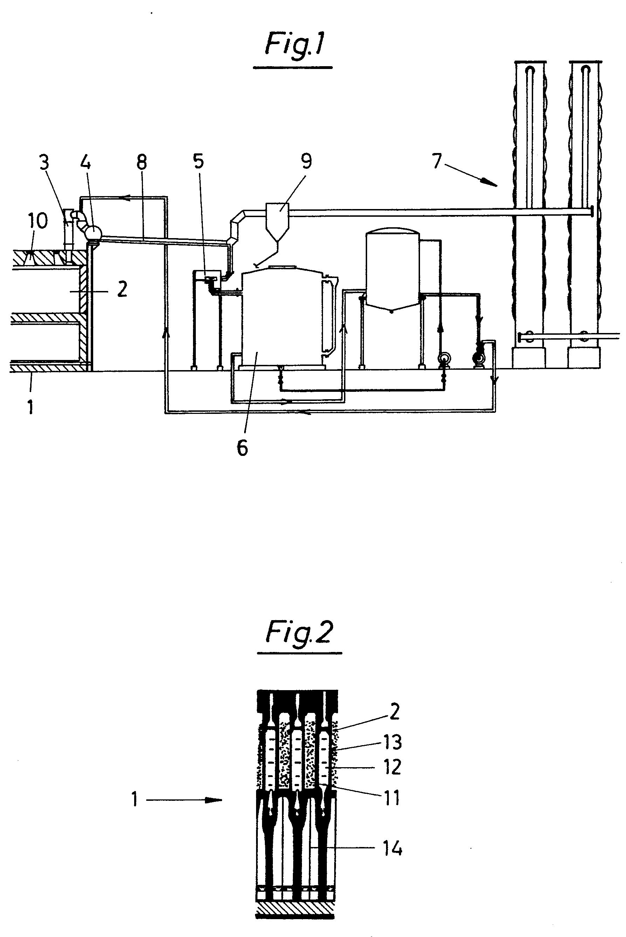

Die in Fig. 1 wiedergegebene Anlage besteht aus dem als Reaktor dienenden Koksofen 1 mit der Ofenkammer 2 sowie den Einrichtungen zur Abscheidung der flüssigen bzw. festen Bestandteile der Einrichtungen zur Reinigung und Aufarbeitung der gasförmigen und flüssigen Produkte.

Die Kokskohle und die Kunststoffabfälle werden wie später noch näher erläutert, in die einzelnen Ofenkammern 2 über

- 11 -

die Fülltrichter 1o eingefüllt. Das Gemisch wird dann in der Ofenkammer 2 indirekt und unter Sauerstoffabschluß aufgeheizt, wobei die freigesetzten Gase,die auch die flüssigen Bestandteile mitnehmen, über das Steigerohr 3 in die Vorlage 4 abgeleitet werden. Hier erfolgt die erste Trennung der flüssigen und der gasförmigen Bestandteile, wobei beide über die Teer/Gasleitung 8 dem Teerscheider 5 mit der Teersenke 6 und den Gaskühlern 7 zugeleitet wird. Im Teerscheider und in der Teersenke erfolgt die Abscheidung und Aufarbeitung des Teers in der Regel mit Hilfe von warmen Ammoniakwasser, das über die Oberleitung auch bis in die Vorlage 4 zurückgepumpt wird, um für einwandfreies Abführen des Teers zu sorgen. Aufgrund des mit eingebrachten und zersetzen Kunststoffes kann es notwendig sein, mehr Ammoniakwasser zuzugeben, um den dickflüssigen Teer sicher über die Teer/Gasleitung 8 abzuführen. Weiterhin kann es zweckmäßig sein, in der Gasleitung einen Zyklon 9 anzuordnen, über den vom Gas mitgeführte Feststoffpartikel abgeschieden werden.

Fig. 2 zeigt mehrere nebeneinanderliegende Ofenkammern 2, 11 im Schnitt, die jeweils vom Beheizungssystem 12 durch eine Zwischenwand 13 abgetrennt sind. In dem Beheizungssystem 12 wird das Gas, wobei es sich um Starkgas oder Schwachgas handeln kann, verbrannt. Die freigesetzte Gaswärme wird über die Zwischenwände 13 in das Kokskohle/ Kunststoffabfallgemisch geführt. Die Brenngase bzw. die benötigte Luft wird in den Regeneratoren 14 vorgewärmt, wobei durch geeignete Wechsel der Gasführung die Regeneratoren 14 einmal vom Abgas durchströmt und nach dem Wechsel vom Gas bzw. der benötigten Luft durchströmt werden.

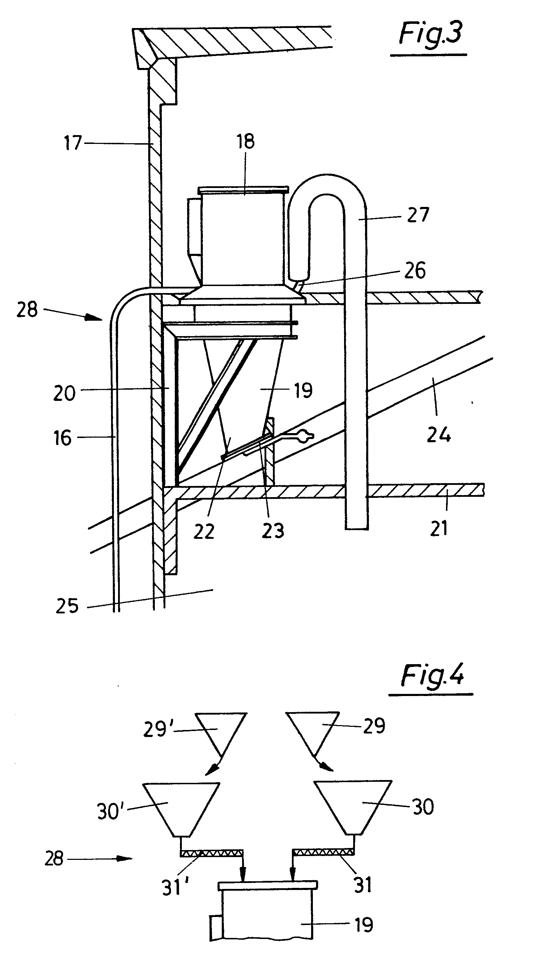

Die Einmischung der Kunststoffabfälle in die Kokskohle (Fig. 3) erfolgt beispielsweise im Bereich des Kokskohlenturms 17 durch kontinuierliche oder diskontinuierliche Zuführung der Kunststoffabfälle in den Kokskohlenstrom. Dazu werden die Kunststoffabfälle über die Saugleitung 16 und mit Hilfe der Vakuumpumpe 18 in den Bunker 19 gefördert. Dieser Bunker 19 ist in einer Stütze 2o gehalten, die sich auf der Decke 21 des Kokskohlenturms 17 und an dessen Wandung abstützt. Der Auslauf 22 des Bunkers 19 ist durch eine Klappe 23 verschlossen und liegt genau über dem Kokskohlenband 24, mit dem diese von der Aufbereitungsanlage direkt oder von einem Zwischenlager inden Kokskohlenturm 17 gefördert wird. Das Kunststoffabfallgemisch oder auch der reine Kunststoff werden auf das aufstrebende Kokskohlenband gegeben und dann zusammen mit der Kokskohle in den Kokskohlenbunker 25 gefüllt. Von hieraus gelangt das Gemisch dann über die Füllwagen direkt in die einzelnen Ofenkammern 2, 11. Die im Bunker 19 freiwerdende Abluft wird über das Abluftrohr 26 und das Dämmrohr 27 ebenfalls in den Kokskohlenbunker 25 geleitet, so daß eine Staubbelastung nicht auftreten kann.

Die aus der Fig. 3 hervorgehende Einrichtung kann als Sortier - und Zumischeinrichtung bezeichnet werden. Bei verschiedenen Einsatzkomponenten, die entweder im planmäßigen Gemisch oder aber als Einzelkomponenten eingesetzt werden sollen, ist es zweckmäßig eine in Fig. 4 dargestellte Sortier- und Zumischeinrichtung 28 vorzuschalten. Hier werden die einzelnen Komponenten in Vorbunkern 29 , 29' vorgehalten und je nach Bedarf in die Mischbunker 3o, 3o' weitergegeben. Da mehrere derartige Vorbunker 29, 29' Mischbunkern 3o, 3o' zugeordnet werden können, kann so bereits vor der Einführung in den Bunker 19 ein genau vorgegebenes Gemisch hergestellt werden. Die Zuführungsschnecke 31 kann dann zu einer weiteren Mischung der einzelnen Komponenten benutzt werden.

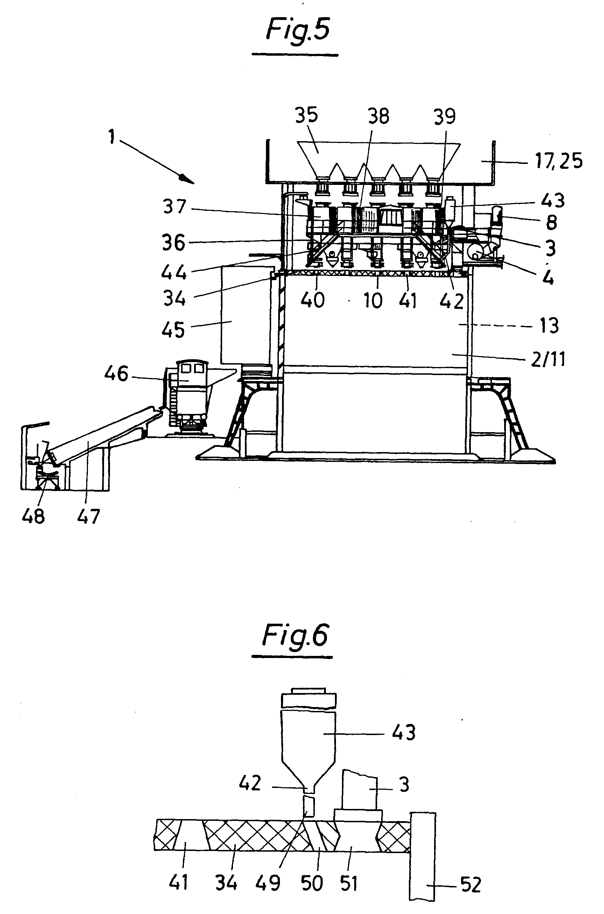

Fig. 5 zeigt einen Koksofen 1 mit verschiedenen Zubehör-

- 13 -

einrichtungen, wobei letztere auf der Ofendecke 34 verfahrbar angeordnet sind. Der Kokskohlenturm 17 bzw. der Kokskohlenbunker 25 weisen am unteren Ende einen Auslauf 35 auf, über den die einzelnen Füllwagen 36 mit ihren verschiedenen Fülltrichtern 37, 38, 39 gleichmäßig beschickt werden können. Diese Fülltrichter 37, 38, 39 weisen alle das gleiche Volumen auf und haben mit den Einfüllöffnungen 1o, 4o, 41 übereinstimmende Ausläufe 44 auf. Diese sind in der Regel längenveränderlich ausgebildet, so daß beim Befüllen eine Umweltbelastung durch Staub und austretende Gase nicht auftreten kann.

Neben den einzelnen Fülltrichtern 37, 38, 39 ist dem Füllwagen 36 ein weiterer Fülltrichter 43 zugeordnet. Dieser wird dazu eingesetzt, nur bestimmte Chargen mit Kunststoffabfällen zu beschicken, was u.a. dann zweckmäßig ist, wenn die einzusetzenden Mengen an Kunststoffabfällen zu gering sind, oder aber wenn die Kunststoffabfälle gezielt in die Ofenkammer 12, 11 eingegeben werden sollen. Der Fülltrichter 43 ist über ein Rohr 42 mit den einzelnen Ausläufen 44 der Fülltrichter 37, 38, 39 zu verbinden. Über geeignete Ventile ist sichergestellt, daß jeweils alle Ausläufe 44 gleichzeitig oder aber nur bestimmte Ausläufe eine zusätzliche Kunststoffabfallbeschickung erhalten. Außerdem kann die eingegebene Menge genau vorgegeben werden.

Das Gemisch aus Kokskohle und Kunststoffabfällen wird wie erläutert über die Einfüllöffnungen 1o, 4o, 41 in die Ofenkammer 2, 11 eingegeben, wo sie dann über die aufgeheizten Zwischenwände 13 beheizt, verkokt und zersetzt werden. Während die gasförmigen und flüssigen Produkte über das Steigerohr 3 und die Vorlage 4 sowie die Teer/Gasleitung 8 abgeführt werden, wird der Koks und die festen Produkte der Kunststoffabfälle über eine Koks-

- 14 -

ausdrückmaschine durch den Kokskuchenführungswagen 45 hindurch auf den Löschwagen 46 gedrückt. Der Löschwagen 46 bringt den glühenden Koks zum hier nicht dargestellten Löschturm und anschließend zurück zur Löschrampe 47, wo er weiter abkühlt und dann über die Bänder 48 zur Klassierung und Zerbrechanlage gefördert wird. Die festen Produkte der Kunststoffabfälle haben sich mit dem Koks fest verbunden oder sind selbst Kokspartikel geworden, so daß sie auch beim Löschen oder Zerkleinern nicht als Sonderprodukte anfallen und bearbeitet werden müssen.

Fig. 6 zeigt in vergrößerter Einzeldarstellung eine Ausbildung der Sortier- und Zumischeinrichtung, mit der eine gezielte und gesonderte Einbringung von Kunststoffabfällen möglich ist. Hierzu kann der zusätzliche Fülltrichter 43 und das Rohr 42 über das Füllrohr 49 unmittelbar mit dem Füllschacht 5o und damit mit der Ofenkammer 2, 11 verbunden werden. Der Füllschacht 5o ist schräg in Richtung Koksofentür bzw. Durchbruchsteigerohr 51 und Ankerständer 52 geneigt, so daß die eingefüllten Kunststoffabfälle in unmittelbare Nähe einmal des Steigerohres und zum anderen der Koksofentür gelangen. Die dann bei der Zersetzung freigesetzten Gase können gezielt über den Durchbruchsteigerohr 51 und das Steigerohr 3 selbst abgesaugt werden. Die gezeigte Ausbildung ist auch dann einsetzbar, wenn beispielsweise Kunststoffabfälle mit hohem Füllstoffgehalt im Anschluß an den Garungsprozeß verarbeitet bzw. zersetzt werden sollen.

B e i s p i e l

Eine genaue Analyse wird dadurch erschwert, daß eine gewollte Vermischung der Einsatzmassen (Kokskohle und Kunststoffabfälle) und damit auch der freigesetzten flüssigen und gasförmigen Rohstoffe eintritt. Aus anderen Pyrolyse-

- 15 -

verfahren weiß man aber, daß bei Zersetzungstemperaturen
von rund 8oo$^\circ$ C (im Koksofen 9oo bis 12oo$^\circ$ C) aus

1. Polyäthylen            = 1oo %
       Gase                    59
       Flüssigkeiten           37
       Teer/feste Prod.         4

2. Polypropylen           = 1oo %
       Gase                    57
       Flüssigkeiten           4o
       Teer/feste Prod.         3

3. Gemisch aus Polyäthylen
   und Polypropylen       = 1oo %
       Gase                    57
       Flüssigkeiten           41
       Teer/feste Prof.         2

Als Einzelkomponenten wurden Wasserstoff (1 Gew.-%),
Methan (39 Gew.-%), Ethylen (32 Gew.-%), Ethan (1o Gew.-%),
Propen (9 Gew.-%) andere Aliphaten sowie Benzol, Toluol
und  Naphtalin. Bezüglich der flüchtigen und gasförmigen
Produkte war eine Erhöhung entsprechend dem Einsatz
der Kunststoffabfälle zu verzeichnen.

0113811

— 1 —

<u>Patentansprüche</u>

1. Verfahren zur Gewinnung von Rohstoffen aus Kunststoffabfällen durch Zersetzung unter hohen Temperaturen und
Sauerstoffabschluß, Abscheidung der flüssigen Bestandteile sowie anschließendem Waschen und Aufarbeiten der
flüssigen und der gasförmigen Rohstoffe, <u>dadurch gekenn-
zeichnet</u>, daß die Abfälle von thermoplastischen Kunststoffen, vorzugsweise von Polypropylen, Polyäthylen und
Polystyrol oder von derartigen Abfallgemischen zusammen
mit der Kokskohle in Koksöfen verkokt und daß die Rohstoffe aus der Kohle und den Kunststoffabfällen gemeinsam
weiter verarbeitet werden.

2. Verfahren nach Anspruch 1, <u>dadurch gekennzeichnet</u>, daß
die Abfälle zusammen mit der Kokskohle einer trockenen
Destillation unterzogen werden.

3. Verfahren nach Anspruch 1 oder Anspruch 2, <u>dadurch ge-
kennzeichnet</u>, daß die Abfälle nach Füllstoffgehalt
sortiert und nur die Abfälle mit geringem Füllstoffgehalt,
vorzugsweise von 1 bis 2 % im Koksofen unter hohen
Temperaturen zersetzt werden.

4. Verfahren nach Anspruch 1, <u>dadurch gekennzeichnet</u>, daß
die Abfälle von Kunststoffen zerklenert, gebunkert und
dann der Kokskohle kontinuierlich zugemischt werden.

5. Verfahren nach Anspruch 1 oder Anspruch 2 und Anspruch 4,
<u>dadurch gekennzeichnet</u>, daß die Abfälle von Kunststoffen
der Kokskohle in einem Verhältnis von o,5 bis 2oo Volumen-%
zugemischt werden.

- 2 -

6. Verfahren nach Anspruch 1, dadurch gekennzeichnet, daß die Kokskohle vorerhitzt und mit Bindemittel versetzt mit den zerkleinerten, vorzugsweise aufgemahlenen Abfällen von Kunststoffen gemischt, verdichtet und dann gemeinsam verkokt wird.

7. Verfahren nach Anspruch 1, dadurch gekennzeichnet, daß die Kokskohle mit 2 bis 1o Volumen-%, vorzugsweise 2 bis 4 Volumen-% Abfällen von Kunststoffen gemischt, auf 1oo bis 15o° C vorerhitzt, verdichtet und dann verkokt wird.

8. Verfahren nach Anspruch 1 oder Anspruch 2, dadurch gekennzeichnet, daß die Abfälle von Kunststoffen und die Kokskohle lagenweise in den Koksofen eingefüllt werden.

9. Verfahren nach Anspruch 1 oder Anspruch 2, dadurch gekennzeichnet, daß die Abfälle von Kunststoffen beim Einfüllen der Kokskohle dieser nur im Bereich der Koksofentüren zugemischt werden.

1o. Verfahren nach Anspruch 1 oder Anspruch 2, dadurch gekennzeichnet, daß Abfälle von Kunststoffen, vorzugsweise die mit mittlerem und hohem Füllstoffanteil kurz vor oder nach Abschluß der Garung in den Koksofen eingefüllt und thermisch zersetzt werden.

11. Verfahren nach Anspruch 1 oder Anspruch 2, dadurch gekennzeichnet, daß Abfälle von Kunststoffen mit mittlerem und hohem Füllstoffanteil als dünne Schicht eingefüllt und von Kokskohle abgedeckt mit dieser zusammen thermisch zersetzt werden.

12. Anlage zur Durchführung des Verfahrens nach Anspruch 1 bis Anspruch 11, d.h. zur thermischen Zersetzung von Abfällen von Kunststoffen, bestehend aus einer Sortier- und Zumischeinrichtung, einem Reaktor mit einem indirekt beheizbaren Reaktorraum und nachgeschalteten Kühlern und Destillationseinrichtungen, dadurch gekennzeichnet, daß die Sortier- und Zerkleinerungseinrichtungen (28) dem Kokskohlenturm (17) einer Kokerei oder einem Füllwagen (36) zugeordnet sind und daß die Koksöfen (1) gleichzeitig zur Verkokung von Kohle, vorzugsweise Steinkohle und zur thermischen Zersetzung der Abfälle von Kunststoffen sowie die Teer- und Gasaufbereitung gleichzeitig auch zur Weiterverarbeitung der Rohstoffe aus den Kunststoffabfällen dienen.

13. Anlage nach Anspruch 12, dadurch gekennzeichnet, daß jeweils einzelnen Koksöfen (1) eine Sortier- und Zumischeinrichtung (28) für Abfälle von Kunststoffen zugeordnet ist.

14. Anlage nach Anspruch 12, dadurch gekennzeichnet, daß dem Teerscheider (5) ein Zyklon (9) vor- oder parallelgeschaltet ist.

15. Anlage nach Anspruch 12, dadurch gekennzeichnet, daß der Füllwagen (36) einen zusätzlichen Fülltrichter (43) aufweist, der mit dem Auslauf (44) der anderen Fülltrichter (37, 38, 39) über ein Rohr (42) verbunden ist, dem miteinander korrespondierend schaltbare Ventile zugeordnet sind.

- 1/3 -

Fig.1

0113811

Fig.2

0113811

-2/3-

Fig.3

Fig.4

0113811

-3/3-

**Fig.5**

**Fig.6**